# EUROPÄISCHE PATENTSCHRIFT

(11) **EP 0 965 650 B1**
(45) Veröffentlichungstag und Bekanntmachung des Hinweises auf die Patenterteilung: **17.03.2004**
(21) Anmeldenummer: 99111453.9
(22) Anmeldetag: 12.06.1999
(51) Int. Cl.: C21C 5/52, C21C 5/42, F27B 3/04, F27B 19/00

(54) **Verfahren und Vorrichtung zur Stahlerzeugung in einem Ofengefäss**
Furnace vessel and method of producing steel
Procédé et dispositif pour la production d' acier dans un cuve de four

(30) Priorität: 19.06.1998 DE 19827299
(43) Veröffentlichungstag der Anmeldung: 22.12.1999
(73) Patentinhaber: SMS Demag AG, 40237 Düsseldorf (DE)
(72) Erfinder: Pleschiutschnigg, Fritz-Peter Prof. Dr.-Ing., 47269 Duisburg (DE); Wu, Wei-Ping Dr.-Ing., 40699 Erkrath (DE)
(74) Vertreter: Valentin, Ekkehard, Dipl.-Ing.

(56) Entgegenhaltungen:
- EP-A- 0 630 977
- DE-A- 4 434 369
- DE-B- 1 000 412
- DE-C- 19 526 704
- US-A- 3 353 807
- US-A- 4 531 971

## Beschreibung

Die Erfindung betrifft eine Vorrichtung sowie ein Verfahren zur Stahlerzeugung in einem Ofengefäß mit einem Ofendeckel sowie mit mindestens einer Elektrode in Gleichstrom- oder Wechselstromausführung und mindestens einer Sauerstofflanze.

Die zunehmende Elektrostahlerzeugung führt zum Einsatz von Schrottersätzen, wie beispielsweise direkt reduziertem Eisen und Flüssig-Roheisen. Die konventionellen Ofengefäße sind entweder als Elektrolichtbogenöfen für reines Schrottschmelzen oder als Konverter für etwa 80 % Flüssig-Roheisen ausgelegt.

Das aus der DE 44 34 369 A1 bekannte Verfahren beruht auf dem abwechselnden Sauerstoffeinblasen und Lichtbogenschmelzen in zwei benachbart angeordneten Ofengefäßen. Nachteilig sind der durch die langen Zykluszeiten begründete hohe Energieverlust und die starke Eisenoxidbildung. Die langen Zykluszeiten ergeben sich aus dem betriebsnotwendigen Austausch der Sauerstoffblaslanze gegen die Elektroden für das Lichtbogenschmelzen. Weitere Nachteile bestehen in dem ungünstigen Sauerstoffblasen und dem starken Spritzen zum Ofendeckel.

Weiterhin ist aus der DE 195 26 704 C1 ein Verfahren bekannt, bei dem in einem Ofengefäß abwechselnd Elektrodenschmelzen und Sauerstoffblasen durchgeführt wird. Nachteilig sind die lange Elektrodenhubhöhe, das ungünstige Schmelzen sowie die langen Zykluszeiten.

Aus der US 3,353,807 ist ein Schmelzofen bekannt, der aus zwei nebengeordneten Zonen besteht, nämlich einer ersten Zone mit einem Sauerstoffbrenner zum Vorwärmen bzw. Vorschmelzen von Schrott und einer zweiten Zone zur Verarbeitung der Schmelze mittels elektrischer Energie mit drei Elektroden. Die zweite Zone weist die Form eines Elektrolichtbogenofens auf, während die erste Zone einen Öffnung mit einem Deckel aufweist. Die erste Zone wird im Sinne einer Vorwärmzone bzw. Schmelzzone verwendet. Hierzu wird eine feste metallische Charge in die erste Zone - chargiert und mittels des Brenners bis zu einem gewissen Grad erwärmt bzw. angeschmolzen. Schmelze fließt dann in die zweite Zone, um dort weiterverarbeitet zu werden.

Die EP 0 630 977 A1 beschreibt einen Konverter zur Herstellung von Stahl. Dieser zeichnet sich dadurch aus, dass ein herkömmlicher Konverter mit Sauerstoffblaslanze zusätzlich eine oder mehrere Elektroden aufweist, so dass gleichzeitig geschmolzen und gefrischt werden kann. Nach dieser Schrift kann beispielsweise in einem ersten Schritt ohne Einsatz der Elektroden gefrischt werden. Zusätzlich in den gleichen Ofenbereich eingebrachter Schrott wird erst in einem zweiten Verfahrensschritt unter Zuhilfenahme der Elektroden geschmolzen und fertig gefrischt, wobei das Fertigfrischen entweder gleichzeitig mit dem zweiten Verfahrensschritt oder erst anschließend an das Schmelzen in einem dritten Verfahrensschritt durchgeführt wird. Ob die Verfahrensschritte gleichzeitig oder nacheinander im gleichen Gefäß ablaufen, hängt von der Beschaffenheit des Schrotts ab, d.h. sperriger Schrott oder kleinstückig.

Schließlich entsteht bei allen bekannten Lichtbogenschmelzverfahren Dioxin im Abgas. Es ist daher erforderlich, das Abgas zusätzlich mit Brennern aufzuheizen, um das Dioxin zu verbrennen.

Ausgehend von diesem Stand der Technik liegt der Erfindung daher die Aufgabe zugrunde, eine Vorrichtung zu schaffen, die weder das Lichtbogenschmelzen noch das Sauerstoffeinblasen benachteiligt, die gleichzeitig die Zykluszeiten verkürzt, damit den Wärmeverlust und Energieverbrauch reduziert und schließlich die Schlackenschäumung beim Lichtbogenschmelzen des Schrotts verbessert.

Die Lösung dieser Aufgabe basiert auf dem Gedanken, ein Reaktionsgefäß zu schaffen, bei dem das Lichtbogenschmelzen von Schrott und das Sauerstoffblasen von Roheisen parallel laufen können.

Im einzelnen wird die Aufgabe bei einer Vorrichtung der eingangs, erwähnten Art dadurch gelöst, daß das Gefäß einen Ofendeckel aufweist mit einem ersten schwenkbar angeordneten Teil, das für das Chargieren von Schrott vorgeschen ist, sowie mit einem zweiten feststehend angeordnetem Teil, der turmförmig ist, wobei in einen schrottfreien Teil des Ofengefäßes unterhalb des Turmförmigen Teils des Deckels Roheisen chargierbar ist.

Der erfindungsgemäß gestaltete Deckel verschließt das Schmelze und Schlacke aufnehmende Ofengefäß. Der erste, schwenkbare, insbesondere flache Teil des Deckels ist für das Chargieren von Schrott, HBI (heiß brickettiertes Eisen) und Roheisenmasse vorgesehen. In der Mitte des ersten, schwenkbaren Teils des Deckels, können Führungen für mindestens eine Elektrode zum Lichtbogenschmelzen angeordnet sein. Der Betrieb der Elektroden kann mit Gleich- oder Wechselstrom erfolgen.

In Übereinstimmung mit herkömmlichen Lichtbogenöfen hat die erfindungsgemäße Vorrichtung eine Abschlackentür und ein Abstichloch.

Der Bereich unter dem zweiten, feststehend angeordneten Teil des Deckels ist frei von Schrott. In diesem Bereich wird das Roheisen zugegeben. Infolge dessen erlaubt die erfindungsgemäße Vorrichtung, daß das Lichtbogenschmelzen von Schrott und das Sauerstoffblasen zum Frischen des Roheisens parallel laufen können.

Ein weiterer Vorteil besteht darin, daß sich die Sauerstoffblasrate ohne Spritzgefahr erhöhen läßt. Da der Bereich des Sauerstoffblasens unter dem zweiten, turmförmigen Teil des Deckels frei von Schrott ist, kann das Sauerstoffblasen zum Beginn oder bereits vor dem Beginn des Lichtbogenschmelzens gestartet werden.

Da bei der erfindungsgemäßen Vorrichtung das Lichtbogenschmelzen und das Sauerstoffblasen parallel ablaufen, verkürzt sich die Zykluszeit um die Hälfte. Hiermit ist eine erhebliche Energieeinsparung verbunden. Bei ein bis zwei kWh/t Energieverlust pro Verfahrensminute und 45 Minuten tap-totap-Zeit erspart die erfindungsgemäße Vorrichtung bis maximal 90 kWh/t.

Schließlich begünstigt die erfindungsgemäße Vorrichtung die Schlackenbildung zum Abdecken des flachen Bades. Sie bildet sich bereits bevor das Lichtbogenschmelzen beendet ist im Bereich des Sauerstoffeinblasens. Die frühzeitige Bildung der Schaumschlacke vermeidet die ansonsten notwendige Reduzierung der Transformatorleistung nach dem Lichtbogenschmelzen und verkürzt damit die Power-On-Zeit gegenüber herkömmlichen Lichtbogenöfen. Bei herkömmlichen Lichtbogenöfen dauert es nach dem Ende des Schrottschmelzens und der Entstehung des flachen Bades etwa ein bis zwei Minuten, bis sich die Schaumschlacke ausbildet.

Schließlich zeichnet sich die erfindungsgemäße Vorrichtung durch eine hohe Flexibilität aus. Sie kann für den Einsatz von bis zu 100 % Schrott, 100 % direkt reduziertem Eisen und bis zu 80 % Flüssig-Roheisen ausgelegt werden.

Der Betreiber kann daher abhängig von den Rohstoffen und Energiepreisen unter Berücksichtigung der jeweils geltenden Umweltauflagen unterschiedliche Charge-Zusammenstellungen wählen. Wegen der für das Sauerstoffblasen günstigen Konstruktion der Vorrichtung ist zudem eine tiefere Entkohlung unter 0,03 % gegenüber herkömmlichen Lichtbogenöfen (0,05 % - 0,10 % Kohlenstoff) zu erwarten. Die starke CO-Reaktion beim Sauerstoffblasen begünstigt zudem die Entstickung.

Über den vorzugsweise am zweiten, turmförmigen Teil angeordneten Trichter, an dessen Einfüllöffnung ein Klappdeckel scharniert ist, wird das Roheisen chargiert. Das Roheisen fließt von einer Pfanne über eine verfahrbare Rinne durch den Trichter in das Ofengefäß. Da das Roheisen im schrottfreien Teil des Ofengefäßes unterhalb des turmförmigen Teils des Deckels chargiert wird, ist dieser Vorgang unabhängig vom Lichtbogenschmelzen und erfordert daher keine Power-Off-Zeit. Der feststehende, turmförmige Teil des Deckels ist vorzugsweise auch für die Führung der Sauerstofflanze vorgesehen. Erdgas und Luft können zusammen mit dem Sauerstoff über die Sauerstofflanze, jedoch auch getrennt davon, eingeblasen werden.

Über eine vorzugsweise oberhalb des turmförmigen Teils des Ofendeckels angeordnete Absaugvorrichtung wird das Abgas bereits während des Schrottchargierens abgesaugt. Hierdurch wird die beim Schrottchargieren entstehende große Menge an Abgas drastisch reduziert. Durch die Abgasführung durch den turmförmigen Teil des Deckels wird gleichzeitig Dioxin verbrannt, das während des Lichtbogenschmelzens von Schrott entsteht.

Durch die Aufheizung des Dioxin enthaltenen Abgases wird es in dem turmförmigen Teil des Deckels verbrannt. Das bei herkömmlichen Vorrichtungen erforderliche Aufheizen des Dioxin enthaltenen Abgases über Brenner außerhalb des Ofengefäßes ist daher nicht mehr erforderlich.

Über ein Meß- und Regelsystem werden in Abhängigkeit der Abgasanalyse der Lanzenabstand zur Badoberfläche und die Einblasrate sowie die Gaszusammensetzung gesteuert, um optimale Entkohlung, Schaumschlackenbildung und Nachverbrennung zu erzielen.

In vorteilhafter Ausgestaltung der Erfindung können die Temperaturmessung und die Probennahme sowie Badspiegelmessung über eine Sublanze durch den turmförmigen Teil des Ofendeckels durchgeführt werden.

Wenn an dem Ofengefäß mindestens ein Brenner und eine Seitenlanze angeordnet ist, können diese für die Zufuhr chemischer Energie und zur Beschleunigung des Lichtbogenschmelzens verwendet werden. Zur Förderung der Schaumschlackenbildung können über die Seitenlanzen Kohle und Sauerstoff eingeblasen werden.

In einer Ausgestaltung der Erfindung können unterhalb des zweiten, turmförmigen Teils des Deckels, insbesondere am Untergefäß, Spülsteine und / oder Unterbaddüsen für das Einblasen von Sauerstoff oder Gasgemischen oder Gas-Feststoffgemischen angeordnet sein, über die Feststoffe, wie beispielsweise Kalk und Kohle sowie Gase, wie beispielsweise Sauerstoff, Erdgas, Argon und Stickstoff eingeblasen werden.

Eine vorteilhafte Betriebsweise der Vorrichtung nach den Ansprüchen 1 - 7 ergibt sich aus den Merkmalen der Ansprüche 8 - 10.

Nachfolgend wird die erfindungsgemäße Vorrichtung sowie deren Betriebsweise anhand der schematischen Darstellungen der Figuren 1 - 3 des näheren erläutert.

Es zeigen:
- Figur 1: eine Aufsicht auf eine erfindungsgemäße Vorrichtung,
- Figur 2: eine Seitenansicht der Vorrichtung nach Figur 1 sowie
- Figur 3: ein Diagramm zur Veranschaulichung des zeitlichen Ablaufs der einzelnen Schritte des Betriebsverfahrens der Vorrichtung nach den Figuren 1 und 2.

Die insgesamt mit 1 bezeichnete Vorrichtung zur Stahlerzeugung besteht im wesentlichen aus einem Ofengefäß 2 mit einem zweiteiligen Deckel, der aus einem ersten schwenkbaren Teil 3 und einem zweiten feststehend angeordneten, turmförmigen Teil 4 besteht. An dem turmförmigen Teil 4 des Deckels ist ein Trichter 5 angeordnet, an dessen Einfüllöffnung ein Klappdeckel 6 scharniert ist. Oberhalb des turmförmigen Teils des Deckels 4 ist eine Absaugvorrichtung 7 für das Abgas angeordnet.

Der zweiteilige Deckel teilt das Ofengefäß 2 in zwei Bereiche. Einen ersten, im Bild links gezeigten Bereich für das Lichtbogenschmelzen, insbesondere von Schrott und einen in der rechten Bildhälfte gezeigten Bereich für das Sauerstoffblasen des Roheisens, das über den Trichter 5 zugeführt wird.

Zum Lichtbogenschmelzen besitzt der schwenkbare Deckelteil 3 Führungen für eine Elektrode 8, die an einem Haltearm 9 geführt ist. Ein Transformator 11 versorgt die Elektrode 9 mit Gleichstrom. Die Gegenelektrode ist als Bodenelektrode 12 ausgeführt.

Der turmförmige Deckelteil 4 führt eine Sauerstofflanze 13, die für das Frischen des Roheisens erforderlich ist.

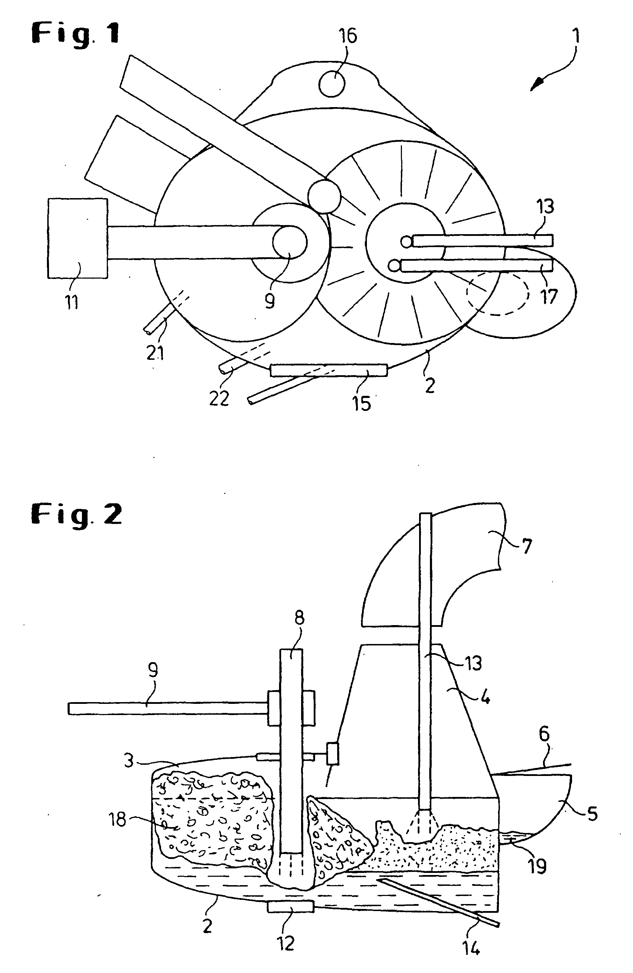

Schließlich besitzt das Ofengefäß 2 Unterbaddüsen 14 sowie eine Schlackentür 15 und ein Abstichloch 16. Ferner kann sich neben der Sauerstofflanze 13, wie in Figur 1 gezeigt, eine Sublanze 17 durch den turmförmigen Deckelteil 4 erstrecken, um hierüber Temperatur zu messen oder Proben zu entnehmen.

Die erfindungsgemäße Vorrichtung 1 arbeitet wie folgt:

Zunächst wird der schwenkbare Deckelteil 3 weggeschwenkt und Schrott 18 chargiert. Gleichzeitig beginnt über die Absaugvorrichtung 7 das Absaugen des während des Schrottchargierens entstehenden Abgases.

Wenig später wird der Klappdeckel 6 geöffnet und über den Trichter 5 Flüssig-Roheisen 19 chargiert.

Das Roheisenfrischen erfolgt über die Sauerstofflanze 13, die durch den turmförmigen Deckelteil 4 hindurchgeführt ist. Gleichzeitig erfolgt das Lichtbogenschmelzen des Schrotts 18 unterstützt durch Brenner 21.

Durch den schwenkbaren Deckelteil 3 erfolgt eine kontinuierliche Zugabe von direkt reduziertem Eisen und Kalk. Außerdem können Kohle und Kalk zu Anfang des Prozesses zugegeben werden, um die Schaumschlackenerzeugung zu fördern. Über Seitenlanzen 22 können zusätzlicher Sauerstoff und andere Gase sowie Staubkohle eingeblasen werden, um die Schaumschlackenbildung zusätzlich zu fördern.

Über die in Figur 1 gezeigte Sublanze 17 werden Temperatur gemessen oder Proben entnommen. Wird die Überhitzung erreicht, wird durch die Schlackentür 15 abgeschlackt und der Flüssigstahl über das Abstichloch 16 abgestochen.

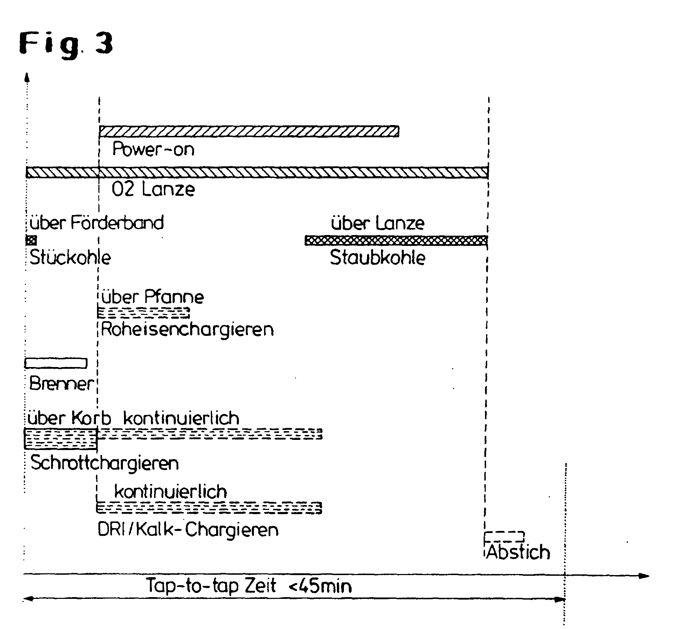

Das zeitliche Zusammenspiel der vorgenannten Verfahrensschritte ist aus Figur 3 ersichtlich. Nach dem Abstich werden die für die nächste Charge erforderlichen Instandhaltungsarbeiten durchgeführt.

Im Ergebnis stellt die erfindungsgemäße Vorrichtung eine Kombination aus einem Lichtbogenofen und einem Konverter dar, die auf einem gemeinsamen Ofengefäß aufbaut. Infolge dessen besitzt der turmförmige zweite Teil 4 des Deckels auch vorzugsweise eine sich nach oben konisch verjüngende Form nach Art eines Konvertergefäßes.

### Bezugszeichenliste

| Nr. | Bezeichnung |
|---|---|
| 1. | Vorrichtung |
| 2. | Ofengefäß |
| 3. | schwenkbarer Teil des Deckels |
| 4. | turmförmiger Teil des Deckels |
| 5. | Trichter |
| 6. | Klappdeckel |
| 7. | Absaugvorrichtung |
| 8. | Elektrode |
| 9. | Haltearm |
| 10. | - |
| 11. | Transformator |
| 12. | Bodenelektrode |
| 13. | Sauerstofflanze |
| 14. | Unterbaddüse |
| 15. | Schlackentür |
| 16. | Abstichloch |
| 17. | Sublanze |
| 18. | Schrott |
| 19. | Roheisen |
| 20. | - |
| 21. | Brenner |
| 22. | Seitenlanze |

## Patentansprüche

1. Vorrichtung zur Stahlerzeugung in einem Ofengefäß mit einem Ofendeckel sowie mit mindestens einer Elektrode in Gleichstrom- oder Wechselstromausführung und mindestens einer Sauerstofflanze,
**dadurch gekennzeichnet,**
**daß** das Gefäß einen Ofendeckel aufweist mit einem ersten schwenkbar angeordneten Teil (3), das für das Chargieren von Schrott vorgesehen ist, sowie mit einem zweiten feststehend angeordneten Teil (4), der turmförmig ist, wobei in einen schrottfreien Teil des Ofengefäßes unterhalb des turmförmigen Teils des Deckels Roheisen chargierbar ist.

2. Vorrichtung nach Anspruch 1,
**dadurch gekennzeichnet,**
**daß** an dem zweiten, turmförmigen Teil (4) ein Trichter (5) angeordnet ist, an dessen Einfüllöffnung ein Klappdeckel (6) scharniert ist.

3. Vorrichtung nach Anspruch 1 oder 2,
**dadurch gekennzeichnet,**
**daß** die Sauerstofflanze (13) sich durch den turmförmigen Teil (4) des Ofendeckels erstreckt.

4. Vorrichtung nach einem der Ansprüche 1 bis 3,
**dadurch gekennzeichnet,**
**daß** oberhalb des turmförmigen Teils (4) des Ofendeckels eine Absaugvorrichtung (7) für das Abgas angeordnet ist.

5. Vorrichtung nach einem der Ansprüche 1 bis 4,
**dadurch gekennzeichnet,**
**daß** sich durch den turmförmigen Teil (4) des Ofendeckels eine Sublanze (17) zur Temperaturmessung und zur Probenentnahme erstreckt.

6. Vorrichtung nach einem der Ansprüche 1 bis 5,
**dadurch gekennzeichnet,**
**daß** an dem Ofengefäß (2) mindestens ein Brenner (21) und eine Seitenlanze (22) angeordnet ist.

7. Vorrichtung nach einem der Ansprüche 1 bis 6,
**dadurch gekennzeichnet,**
**daß** unterhalb des zweiten Teils (4) des Ofendeckels Spülsteine und/oder Unterbaddüsen (14) für das Einblasen von Sauerstoff oder Gasgemischen oder Gas-/Feststoffgemischen angeordnet sind.

8. Verfahren zur Erzeugung von Stahl in einem Ofen nach einem der Ansprüche 1 bis 7,
**dadurch gekennzeichnet,**
**daß** das Lichtbogenschmelzen des Schrotts und das Sauerstoffblasen zum Roheisenfrischen zumindest teilweise gleichzeitig in dem Ofengefäß (2) durchgeführt werden, wobei über einen ersten schwenkbar angeordneten Teil (3) eines Ofendeckels Schrott chargiert wird und in einen schrottfreien Teil unterhalb eines zweiten feststehend angeordneten turmförmigen Deckelteils (4) Roheisen chargiert wird.

9. Verfahren nach Anspruch 8,
**dadurch gekennzeichnet,**
**daß** während des Schrottchargierens das Abgas abgesaugt wird.

10. Verfahren nach Anspruch 8 oder 9,
**dadurch gekennzeichnet,**
das Kohle und Kalk über den turmförmigen Teil (4) des Ofendeckels zugegeben werden und unter diesem Teil des Ofendeckels bereits während des Lichtbogenschmelzens im Bereich unter dem ersten schwenkbaren Teil (3) des Ofendeckels Schaumschlacke erzeugt wird.

## Claims

1. A device for producing steel in a furnace vessel having a furnace cover as well as at least one direct current or alternating current electrode and at least one oxygen lance,
**characterized in that** , the vessel has a furnace cover with a pivotally disposed first portion (3) that is provided for charging scrap metal as well as with a second fixedly disposed portion (4) that is formed in a tower-like configuration, pig iron being chargeable into a scrap-free part of the furnace vessel that is located underneath the tower-shaped portion of the cover.

2. The device according to claim 1,
**characterized in that,**
on the tower-shaped second portion (4), there is disposed a hopper (5) to the feed opening of which a lid (6) is hinged.

3. The device according to claim 1 or 2,
**characterized in that**
the oxygen lance (13) extends through the tower-shaped portion (4) of the furnace cover.

4. The device according to any of the claims 1 through 3,
**characterized in that**
a suction means (7) for drawing the exhaust gas is disposed above the tower-shaped portion (4) of the furnace cover.

5. The device according to any of the claims 1 through 4,
**characterized in that**
a sublance (17) for measuring the temperature and for taking a sample extends through the tower-shaped portion (4) of the furnace cover.

6. The device according to any of the claims 1 through 5,
**characterized in that**
at least one burner (21) and one side lance (22) are disposed on the furnace vessel (2).

7. The device according to any of the claims 1 through 6,
**characterized in that**,
beneath the second portion (4) of the furnace cover, there are disposed purging refractories and/or below bath nozzles (14) for injecting oxygen or a gas mixture or a solid/gas mixture.

8. A method of producing steel in a furnace according to any of the claims 1 through 7,
**characterized in that**
the scrap is arc melted and oxygen is lanced into the bath of raw pig iron in the furnace vessel (2) at least partially concurrently, scrap being charged through a first pivotally disposed portion (3) of a furnace cover and pig iron being fed into a scrap free part located beneath a second fixedly disposed tower-shaped cover portion (4).

9. The method according to claim 8,
**characterized in that**
the exhaust gas is drawn while the scrap metal is being charged.

10. The method according to claim 8 or 9,
**characterized in that**
coal and lime are fed through the tower-shaped portion (4) of the furnace cover and that, beneath said portion of the furnace cover, foamed slag is generated in the region located beneath the first pivotal portion (3) of the furnace cover already during the arc melting process.

## Revendications

1. Dispositif destiné à l'élaboration d'acier dans une cuve de four avec un couvercle de four ainsi qu'avec au moins une électrode de courant continu ou de courant alternatif et avec au moins une lance à oxygène,
**caractérisé en ce que**
la cuve comporte un couvercle de four présentant une première partie (3) montée pivotante et prévue pour charger les ferrailles ainsi qu'une deuxième partie (4) montée fixe et conformée en forme de tour, la fonte brute étant destinée à être chargée dans une partie de la cuve de four ne contenant pas de ferrailles et située en dessous de la partie en forme de tour du couvercle.

2. Dispositif selon la revendication 1,
**caractérisé en ce que**
sur la deuxième partie (4) en forme de tour est montée une trémie (5) sur l'orifice de remplissage de laquelle est articulé un couvercle à charnière (6).

3. Dispositif selon la revendication 1 ou 2,
**caractérisé en ce que**
la lance à oxygène (13) traverse la partie (4) en forme de tour du couvercle de four.

4. Dispositif selon l'une quelconque des revendications 1 à 3,
**caractérisé en ce qu'**
un dispositif d'aspiration (7) des fumées est disposé au-dessus de la partie (4) en forme de tour du couvercle de four.

5. Dispositif selon l'une quelconque des revendications 1 à 4,
**caractérisé en ce qu'**
une lance inférieure (17) destinée aux prises de température et d'échantillons traverse la partie (4) en forme de tour du couvercle de four.

6. Dispositif selon l'une quelconque des revendications 1 à 5,
**caractérisé en ce qu'**
au moins un brûleur (21) et une lance latérale (22) sont montés sur la cuve de four (2).

7. Dispositif selon l'une quelconque des revendications 1 à 6,
**caractérisé en ce que**
sont disposés en dessous de la deuxième partie (4) du couvercle de four des réfractaires d'élimination et/ou des buses (14) situées à la base du bain et destinées à insuffler de l'oxygène, des mélanges gazeux ou des mélanges solide/gaz.

8. Procédé d'élaboration d'acier dans un four selon l'une quelconque des revendications 1 à 7,
**caractérisé en ce que**
la fusion des ferrailles à l'arc et le soufflage d'oxygène sur la fonte en fusion pendant son affinage s'effectuent du moins en partie simultanément dans la cuve de four (2), les ferrailles étant chargées par une première partie (3) d'un couvercle de four montée pivotante et la fonte brute étant chargée dans une partie ne contenant pas de ferrailles et située en dessous d'une deuxième partie (4) de couvercle en forme de tour montée fixe.

9. Procédé selon la revendication 8,
**caractérisé en ce que**
les fumées sont aspirées pendant le chargement des ferrailles.

10. Procédé selon la revendication 8 ou 9,
**caractérisé en ce que**
le charbon et la chaux sont rajoutés par la partie (4) en forme de tour du couvercle de four et qu'en dessous de cette partie du couvercle de four la ponce de laitier se forme déjà pendant la fusion à l'arc dans la zone située en dessous de la première partie (3) du couvercle de four montée pivotante.
